# EUROPEAN PATENT APPLICATION

(11) **EP 4 674 274 A2**
(43) Date of publication of application: **07.01.2026**
(21) Application number: 24764186.3
(22) Date of filing: 28.02.2024
(51) Int. Cl.: A23F 5/16, A23F 5/02, A23F 5/04, A23F 5/06

(54) **COFFEE BEANS FROM WHICH SILVERSKIN AT CENTER CUT POSITION THEREOF IS SEPARATED AND REMOVED AND METHOD FOR MANUFACTURING SAME**

(30) Priority: 02.03.2023 KR 20230027674
(71) Applicant: Kim, Myo Woong, 13595 Seongnam-si (KR)
(72) Inventor: Kim, Myo Woong, 13595 Seongnam-si (KR)
(74) Representative: ABG Intellectual Property Law, S.L.
(86) International application number: PCT/KR2024/002559
(87) International publication number: WO 2024/181787

(57) **Abstract**

The present invention relates to: coffee beans from which silverskin located in the center thereof is separated and removed, in which, by separating and removing silverskin located in the center of coffee beans, the unique taste, flavor and color of coffee can be maintained; and a method for manufacturing same. In addition, the expiration date of coffee beans can be increased by reducing rancidity and maintaining the natural freshness of the coffee beans. In addition, by removing silverskin located in the center of coffee beans, the extraction amount of coffee can be increased and the material costs of coffee beans can be reduced. In addition, the unique taste, flavor and color of coffee can be maintained by removing elements of coffee taste deterioration that may occur due to mixing of fiber, coffee oil, and the like.

## Description

### [Technical Field]

The present invention relates to coffee beans that can maintain the inherent taste, flavor, and color of coffee by separating and removing the silverskin located in the center cut (central part) of the coffee bean, and a method for manufacturing the same.

### [Background Art]

Generally, coffee is classified into instant coffee and brewed coffee.

Here, instant coffee is a processed, ready-to-drink coffee that dissolves well in hot water or water. The first commercial product was manufactured by G. Borden in the United States in 1901. It is produced by roasting, cooling, and grinding the green coffee beans (the seeds of the coffee cherry), then passing steam or hot water through them to obtain extract. Particles are removed from the extract using a centrifuge, and the extract is then rapidly freeze-dried. In Korea, green coffee beans are imported from their countries of origin to mass-produce and sell instant coffee on the market.

Recently, in addition to instant coffee made by the aforementioned rapid freeze-drying method, brewed coffee, made by roasting, grinding, and brewing the green coffee beans (the seeds of the coffee cherry), has been gaining popularity and is widely distributed.

Such brewed coffee is one of the most beloved beverages in the world. Looking at recent trends in the domestic and international coffee markets, the scale of the brewed coffee market is continuously and rapidly growing. In line with this expanding market, consumer demands for the taste of brewed coffee are becoming increasingly segmented and diversified.

As brewed coffee is fundamentally a beverage of preference, it is consumed for the enjoyment of its aroma and taste, beyond its nutritional value. Various studies are being conducted to mitigate the deterioration of coffee taste caused by the mixture of fiber and coffee oils during the roasting and grinding processes, and to produce brewed coffee with a smooth taste and aroma.

Furthermore, since coffee is cultivated and harvested in various countries around the world, green coffee beans may be contaminated with substances such as soil and other impurities depending on the local harvesting methods. They are often supplied and distributed to consumers with the silverskin located in the center of the coffee bean not fully removed.

Here, the silverskin is a thin, silvery membrane that envelops the coffee bean. While some of it is naturally shed during the roasting process, if brewed coffee is brewed with the silverskin not completely removed from the bean, it is difficult to maintain the inherent taste, flavor, and color of the coffee.

Therefore, to solve the above-mentioned problems, the present invention aims to provide coffee beans with the silverskin in the center cut separated and removed, and a method for preparing the same, which can maintain the inherent taste, flavor, and color of coffee by removing contaminants, impurities, and the silverskin located in the center of the coffee bean that remain or are generated during the harvesting, refining, processing, and distribution of coffee beans.

### [Summary of Invention]

### [Technical Problem]

The present invention is intended to solve the aforementioned problems. An object of the present invention is to provide coffee beans with the silverskin in the center cut separated and removed, and a method for preparing the same, which allows for the extracted coffee to contain the inherent taste and flavor of coffee and maintain its inherent color by brewing coffee with silverskin-removed coffee beans.

Other objects and advantages of the present application will become clearer from the following detailed description, together with the appended claims and drawings. Matters not described in this specification can be sufficiently recognized and inferred by those skilled in the technical field of the present application or similar technical fields, and thus their description is omitted.

### [Solution to Problem]

A method for preparing coffee beans with silverskin separated and removed according to an aspect of the present invention may be characterized by comprising: a washing step of putting green coffee beans into a storage container filled with water, washing the green coffee beans, and taking the green coffee beans out; a step of primarily separating and removing the silverskin of the green coffee beans by a physical or chemical method after the washing step; a step of secondarily separating and removing the silverskin located in the center cut of the green coffee beans by heat-treating the green coffee beans with steam after the primarily silverskin separating and removing step; a drying step of drying the green coffee beans that have undergone the heat treatment step; a step of roasting the green coffee beans that have undergone the drying step; and a step of tertiarily separating and removing the silverskin located in the center cut of the coffee beans by grinding the roasted beans.

In the primarily silverskin separating and removing step, the physical or chemical method may be characterized by being one or more of saltwater, a brush, and high-pressure air.

In the secondary silverskin separating and removing step, the heat treatment may be characterized by being performed with steam at 95°C to 100°C for 3 to 5 minutes.

The roasting step may be characterized by roasting the green coffee beans at a temperature of 200°C to 220°C for 10 to 14 minutes.

The tertiary silverskin separating and removing step may be characterized by grinding the coffee beans to a particle size within 1.0 mm using two or more grinding rollers.

According to another aspect of the present invention, the invention provides coffee beans with silverskin separated and removed, prepared by the above method.

The acid value of the coffee bean powder may be characterized by being included at a concentration of 2.0 mg/g to 4.5 mg/g.

The peroxide value of the coffee bean powder may be characterized by being included at a concentration of 15 meq/kg to 39 meq/kg.

According to another aspect of the present invention, a processed coffee product prepared by grinding the coffee beans is provided.

According to yet another aspect of the present invention, a coffee beverage prepared by brewing the processed coffee product is provided.

### [Advantageous Effects of Invention]

The coffee beans with the silverskin in the center cut separated and removed according to the present invention can reduce the rancidity of the coffee beans and maintain their original freshness, thereby increasing their consumption date.

Furthermore, the present invention can increase the extraction amount of coffee and reduce the material cost of coffee beans by removing the silverskin located in the center of the beans.

In addition, the present invention can maintain the inherent taste, flavor, and color of coffee by removing elements that can cause taste deterioration, such as the mixture of fiber and coffee oils.

The effects of the present invention are not limited to those mentioned above, and other unmentioned effects can be clearly understood by those skilled in the art from the description below.

### [Brief Description of Drawings]

The accompanying drawings are intended to explain the present invention in more detail to those of ordinary skill in the art, and the technical idea of the present invention is not limited thereto.
FIG. 1 is a photograph of a coffee bean showing the silverskin located in the center cut according to an aspect of the present invention.
FIG. 2 is a test report analyzing the components of the silverskin in the coffee bean according to an aspect of the present invention.
FIG. 3 is a test report analyzing the components of the silverskin in a coffee bean 10 days after roasting according to an aspect of the present invention.
FIG. 4 is a test report analyzing the components of a powdered sample of a coffee bean containing silverskin according to an aspect of the present invention.
FIG. 5 is a test report analyzing the components of a powdered sample of a coffee bean with the silverskin removed according to an aspect of the present invention.

### [Detailed Description of the Invention]

Hereinafter, preferred embodiments according to the present invention will be described in detail. Prior to this, terms or words used in this Specification and claims should not be interpreted in a conventional or dictionary sense, but should be interpreted in a meaning and concept consistent with the technical idea of the present invention, based on the principle that the inventor can appropriately define the concept of terms to best explain his or her invention.

Therefore, the configurations described in the embodiments and shown in the drawings are merely the most preferred embodiments of the present invention and do not represent the entire technical idea of the present invention. It should be understood that there can be various equivalents and modifications to replace them at the time of this application.

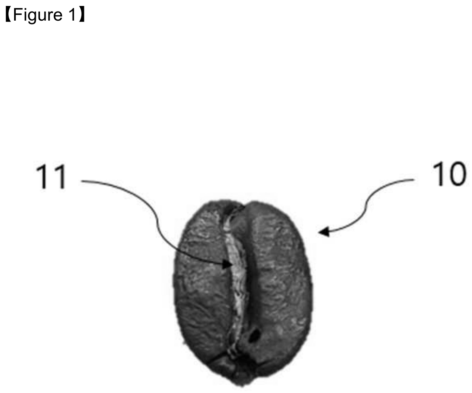

As shown in FIG. 1, the present invention relates to a coffee bean (10) and a method for manufacturing the same, more specifically, to coffee beans with the silverskin in the center cut separated and removed, and a method for manufacturing the same, which can include the inherent taste and flavor of coffee in the extracted coffee and maintain its inherent color by removing 99% of the silverskin (11), a factor of taste deterioration, located in the center cut, a vertical groove in the center of the coffee bean.

Green coffee beans are composed of various components. Among them, the most important components are polysaccharides, lipids, organic amino acids, proteins, minerals, caffeine etc. The content of these components varies slightly depending on the type of green bean (Arabica, Robusta, etc.), production region, and cultivation environment. However, based on 100% by weight of green coffee beans, they generally contain 37 to 55 wt% polysaccharides, 11 to 13 wt% lipids, 11 to 16 wt% organic amino acids, 4 to 5 wt% protein, 3 to 5 wt% minerals, around 2 wt% fatty acids, 1 wt% chlorogenic acid, 1 wt% trigonelline, and 1 wt% caffeine, etc.

Furthermore, green coffee beans contain various bioactive substances including polyphenols, flavonoids, and chlorogenic acid, etc. Although the parchment (endocarp, inner hull) and silverskin (a component enveloping the coffee bean) generated during the processing of green coffee beans have been discarded, recently, dried silverskin is sometimes consumed as a tea. The reason for this is that chlorogenic acid is known to have a sour taste and to have preventive effects against cancer, diabetes, and arteriosclerosis, as well as antioxidant activity.

Furthermore, research has shown that the antioxidant value (ORAC: Oxygen-Radical Absorbance Capacity) of silverskin, which contains a large amount of chlorogenic acid, is 15,000, which is 625 times that of blueberries and 90 times that of Asia berries, making it the highest concentrated antioxidant value among existing fruits.

However, although silverskin containing a large amount of chlorogenic acid has excellent antioxidant functions, it also contains components such as fiber and coffee oils, which can spoil the inherent taste and flavor of coffee.

Generally, after obtaining green coffee beans, most beans dried using natural methods like sunlight contain moisture within 12%. Coffee beans prepared by processing these dried green coffee beans as they are can deteriorate during distribution due to harmful substances, foreign matter, and silverskin.

Moreover, coffee beans sold on the market are ground together with the silverskin. After about 2 to 3 days, the coffee beans begin to go rancid, and after about 7 days, they lose their original taste and flavor. However, the coffee beans of the present invention, with the silverskin in the center cut separated and removed, can minimize rancidity by removing 99% of the center cut containing the silverskin, and can maintain the original freshness of freshly roasted beans for about a month.

Additionally, when the pulp of the coffee cherry is removed, there is a hard shell called parchment. When the parchment is removed, there is the silverskin, which looks like dead skin and envelops the center cut of the coffee bean.

The silverskin, also called coffee chaff, is the thin, silvery membrane that remains after the hull and pulp of the coffee are removed through various processing stages of the green coffee bean.

Furthermore, the silverskin can be separated and removed by one or more methods selected from the group consisting of steam, washing, and grinding, etc.

The separation and removal method using washing may involve putting green coffee beans into a storage container filled with water and washing them, or adding a physical or chemical method to separate and remove the silverskin from the green coffee beans. This separation and removal method can remove foreign substances, residual pesticides, etc., attached to the coffee beans and simultaneously separate and remove the silverskin from the green coffee beans.

The said physical or chemical property may be one or more of saltwater, a brush, and high-pressure air, but is not limited thereto.

When using a saltwater solution as a chemical method, the sterilizing effect of salt can sterilize bacteria from contamination on the surface of the green coffee beans. In addition, salt has the effect of adsorbing and decomposing heavy metals. Along with this effect, the osmotic pressure effect of saltwater can efficiently remove contaminants such as residual pesticides that have permeated the surface of the green bean.

When using a brush or high-pressure air as a physical method, the silverskin of the green coffee bean can be effectively removed using pressure.

The separation and removal method using steam can maintain the inherent taste, flavor, and color of coffee by separating and removing 99% of the silverskin located in the center cut of the green coffee bean by heat-treating the green coffee beans with 100°C steam for 3 to 5 minutes, as the silverskin is a cause of off-flavors that degrade the inherent taste of coffee.

Moreover, heating the green coffee beans with 100°C steam for about 3 to 5 minutes is suitable for separating and removing the silverskin located in the center cut of the green coffee beans. This is because if the heating time with steam is less than 3 minutes, the silverskin in the center cut is not separated and removed, and if it exceeds 5 minutes, the green coffee beans will absorb a large amount of water.

The green coffee beans that have completed the heat treatment are in a moist state, so they must be quickly drained and dried. This is because if they are not dried quickly, mold may grow or deterioration may begin. To prevent deterioration as much as possible, it is desirable to dry them within at least 1 hour.

The separation and removal method using grinding can produce coffee beans with the silverskin in the center cut separated and removed by roasting the green coffee beans at a temperature of 200°C to 220°C for 10 to 14 minutes, and then grinding the resulting coffee beans to a particle size of 1.0 mm or less using two or more grinding rollers.

Furthermore, the separation and removal methods are not limited to those mentioned above. Even when the silverskin located in the center cut of the coffee bean is separated and removed, the loss rate of the coffee bean can be minimized to 3% to 5%.

The silverskin of the green coffee beans may also be separated and removed by putting and washing the green coffee beans into a storage container after being filled with water, or by adding a physical or chemical method. By this separation and removal method, foreign substances and residual pesticides attached to the coffee beans can be removed, and simultaneously, the silverskin of the green coffee beans can be separated and removed.

The said physical or chemical property may be one or more of saltwater, a brush, and high-pressure air, but is not limited thereto.

When using a saltwater solution as a chemical method, bacteria from contamination on the surface of the green coffee beans can be sterilized due to the sterilizing effect of salt. Furthermore, salt has the efficacy to adsorb and decompose heavy metals, and in addition to this effect, contaminants such as residual pesticides that have permeated the surface of the green bean can be efficiently removed by the osmotic pressure effect of the saltwater.

When using a brush or high-pressure air as a physical method, the silverskin of the green coffee bean can be effectively removed by using pressure.

In the separation and removal method using steam, because the silverskin is a cause of so-called 'off-flavors' that degrade the inherent taste of coffee, the inherent taste, flavor, and color of the coffee can be maintained by heat-treating the green coffee beans with 100°C steam for 3 to 5 minutes to separate and remove 99% of the silverskin located in the center cut position of the green coffee beans.

Moreover, heating the green coffee beans with 100°C steam for about 3 to 5 minutes is suitable for separating and removing the silverskin located in the center cut position of the green coffee beans. This is because if the heating time with steam is less than 3 minutes, the silverskin in the center cut position of the green coffee beans is not separated and removed, and if the heating time with steam exceeds 5 minutes, the green coffee beans will contain a large amount of moisture.

Hereinafter, the present invention will be described in more detail through examples. These examples are merely for illustrating the present invention, and the scope of the present invention is not to be construed as being limited by these examples.

### Experimental Example 1: Component Content According to the Presence or Absence of Silverskin in Coffee Beans

The residual amounts of components were compared as shown in Tables 1 to 4 below for each of the following: the silverskin from the center cut of coffee beans according to the present invention, silverskin 10 days after roasting, powdered coffee beans containing silverskin from the center cut, and powdered coffee beans with the silverskin from the center cut removed.

Each result was confirmed through a test and inspection report from the KHFF Testing & Research Institute.

**[Table 1]**

| Test Item | Test Result |
|---|---|
| Ochratoxin A (µg/kg) | Not Detected |
| Carbohydrates (%) | 67.95 |
| Crude Fat (%) | 6.33 |
| Moisture (%) | 3.61 |
| Ash (%) | 5.99 |

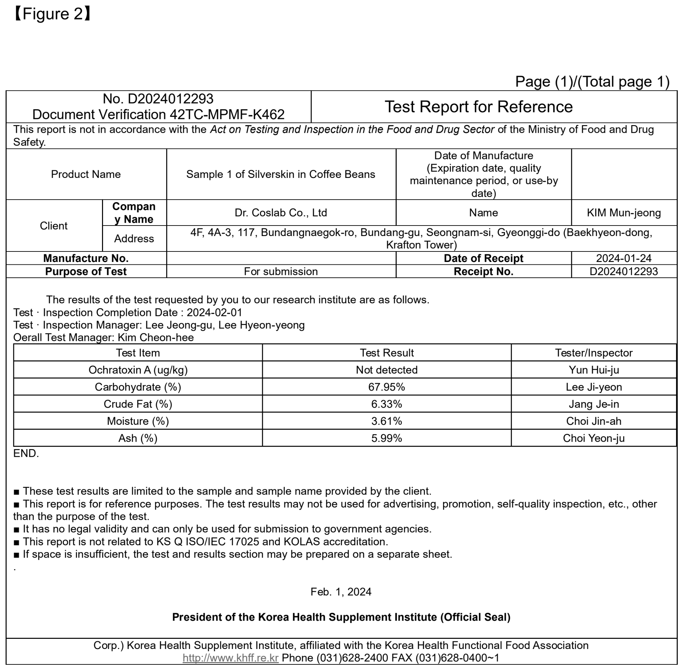

Table 1 and FIG. 2 show the components of the silverskin from the coffee bean center cut. Ochratoxin A, a mycotoxin, was not detected in the silverskin from the coffee bean center cut.

**[Table 2]**

| Test Item | Test Result |
|---|---|
| Ochratoxin A (µg/kg) | 3.7252 |

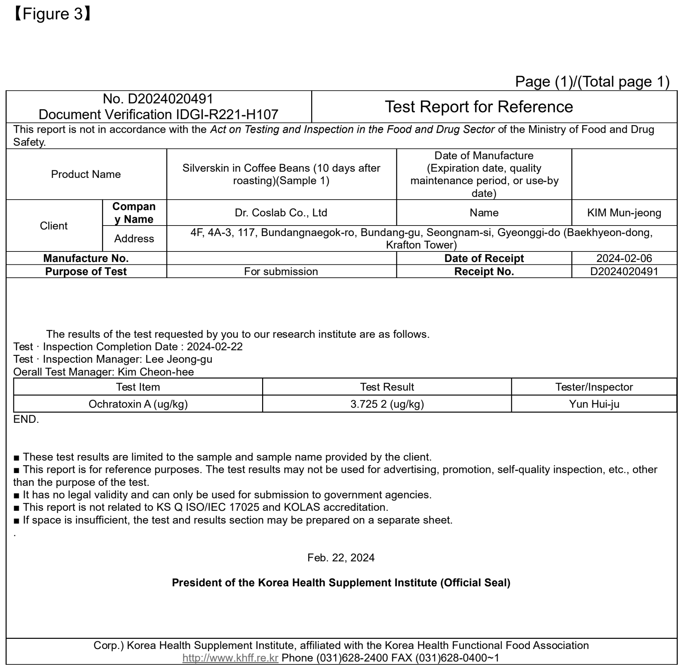

Table 2 and FIG. 3 show the components 10 days after roasting a coffee bean with silverskin in the center cut. In the case of coffee beans with silverskin in the center cut that were roasted and left for 10 days, 3.7252 µg/kg of Ochratoxin A, a mycotoxin, was detected in the silverskin.

**[Table 3]**

| Test Item | Test Result |
|---|---|
| Acid Value (mg/g) | 4.56 |
| Peroxide Value (meq/kg) | 39.48 |

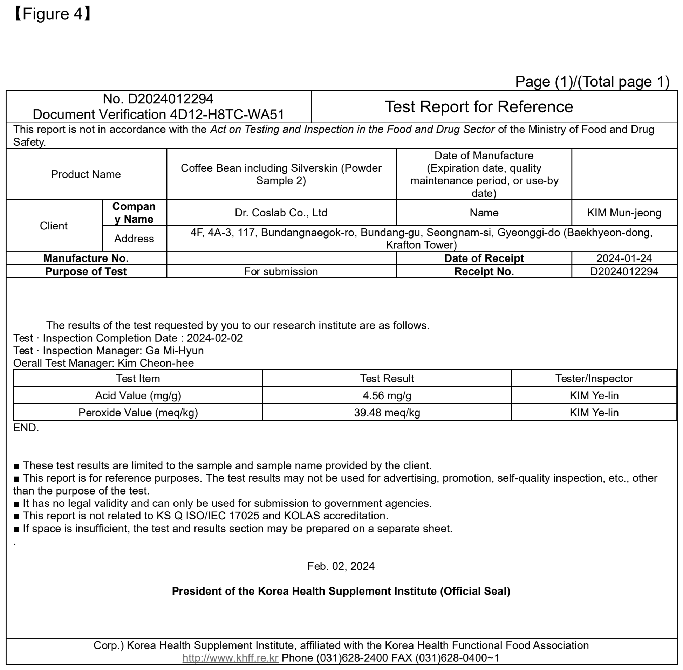

Table 3 and FIG. 4 show the components of powdered coffee beans containing silverskin from the center cut. It was confirmed that in the case of powdered coffee beans containing silverskin from the center cut, the acid value and peroxide value were higher than in Table 4 below, indicating that rancidity proceeds more easily.

**[Table 4]**

| Test Item | Test Result |
|---|---|
| Acid Value (mg/g) | 3.98 |
| Peroxide Value (meq/kg) | 21.51 |

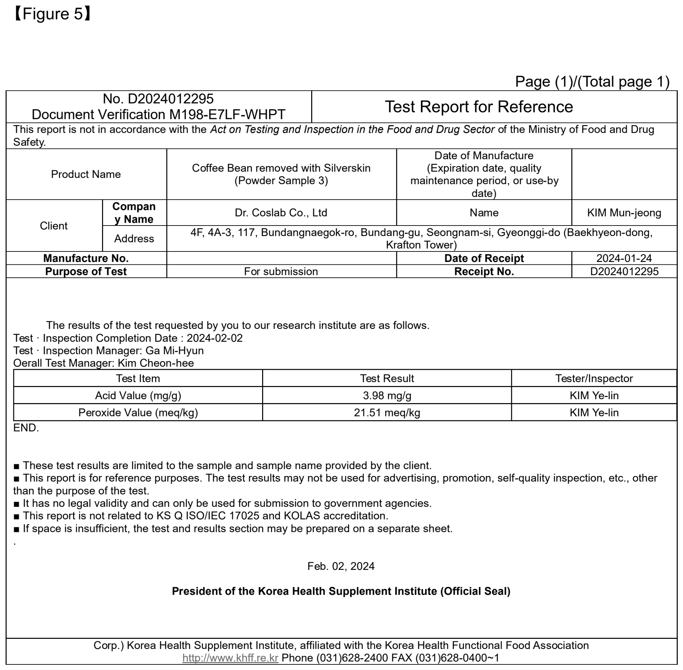

Table 4 and FIG. 5 show the components of powdered coffee beans with the silverskin from the center cut removed. It was confirmed that in the case of powdered coffee beans with the silverskin from the center cut removed, unlike in Table 3 above, the acid value and peroxide value were lower, indicating that rancidity is prevented.

### [Example 1]

### 1-1. Preparation of Coffee Beans with Silverskin in the Center Cut Separated and Removed

100g of green coffee beans were put into a 1L storage container filled with water and washed. Then, a brush was used to separate and remove the silverskin attached to the green coffee beans. After that, the silverskin located in the center cut of the green coffee beans was separated and removed by heat-treating with 100°C steam generated from 0.5L of water for 5 minutes. The green coffee beans that had undergone the heat treatment step were placed on a sieve and dried for 40 minutes by blowing a gentle fan breeze from below, yielding 96g of washed green coffee beans.

Then, a roaster was preheated to 210°C, and the dried green beans were introduced and roasted for 12 minutes to separate and remove the silverskin located in the center cut of the coffee beans, thereby obtaining coffee beans with the silverskin in the center cut separated and removed.

### 1-2. Preparation of Coffee from Beans with Silverskin in the Center Cut Separated and Removed

The coffee beans obtained in Example 1-1, with the silverskin in the center cut separated and removed, were ground to make coffee powder. A coffee beverage was then prepared by brewing with hot water, using a ratio of 10g of coffee powder to 120 mL of hot water.

### [Comparative Example 1]

Unlike in Example 1, a coffee beverage was prepared as in Example 1-2 using coffee beans containing silverskin in the center cut, prepared according to a conventional coffee bean preparation method.

### [Comparative Example 2]

Unlike in Example 1, a coffee beverage was prepared as in Example 1-2 using Company A's coffee beans, prepared according to a conventional coffee bean preparation method.

### [Comparative Example 3]

Unlike in Example 1, a coffee beverage was prepared as in Example 1-2 using Company B's coffee beans, prepared according to a conventional coffee bean preparation method.

### [Comparative Example 4]

Unlike in Example 1, a coffee beverage was prepared as in Example 1-2 using Company C's coffee beans, prepared according to a conventional coffee bean preparation method.

### [Comparative Example 5]

Unlike in Example 1, a coffee beverage was prepared as in Example 1-2 using Company D's coffee beans, prepared according to a conventional coffee bean preparation method.

### Test Example 2: Brix, pH, and TDS Measurement

To confirm the evaluation of Brix, pH, and TDS of the coffee beverage prepared with coffee beans with the silverskin in the center cut separated and removed according to the present invention, the following evaluation test was conducted.

The conducted evaluation test compared the coffee beverage with the silverskin in the center cut separated and removed (Example 1), a coffee beverage without the silverskin separated and removed (Comparative Example 1), and coffee beverages from companies A to D (Comparative Examples 2 to 5), and the results were evaluated as shown in Table 5 below.

### Experiment 1 - Brix Measurement

Brix is a unit representing sugar concentration, usually measured with a refractometer, and indicates the sugar concentration of each extracted coffee as a percentage (%). The solute contains mostly sugar and trace amounts of salt, protein, acid, and other components. Therefore, a high Brix value may, though not necessarily, indicate a high sugar content. Brix was measured using the "PAL-1" meter (ATAGO Co.), and the measurement results are shown in Table 5 below.

### Experiment 2 - pH Measurement

pH is a numerical value indicating the degree of acidity or alkalinity. It measures and indicates the chlorogenic acid content of each extracted coffee. The pH of the coffee prepared was measured, and the results are shown in Table 5 below.

### Experiment 3 - TDS Measurement

TDS stands for Total Dissolved Solids and measures the dissolved minerals, salts, metals, cations, and anions in the extracted coffee. That is, when a sample coffee is filtered using a filter paper with a pore size of 0.45 µm, all solids except for water that pass through the filter paper are the total dissolved solids. A high TDS value means that the so-called 'body', which creates the unique taste of coffee, is good.

**[Table 5]**

| | Example 1 | Comp. Ex. 1 | Comp. Ex. 2 | Comp. Ex. 3 | Comp. Ex. 4 | Comp. Ex. 5 |
|---|---|---|---|---|---|---|
| **Brix(%)** | 0.2 | 0.1 | 0.1 | 0.09 | 0.1 | 0.1 |
| **pH** | 5.2 | 6.2 | 6.3 | 6.1 | 6.2 | 6.2 |
| **TDS(ppm)** | 1430 | 1220 | 1250 | 1290 | 1230 | 1280 |

As can be seen from the experimental results shown in Table 5, it was confirmed that the coffee beverage prepared with coffee beans with the silverskin in the center cut separated and removed according to the present invention (Example 1) is significantly superior in Brix, pH, and TDS compared to the coffee beverage without the silverskin separated and removed (Comparative Example 1) and commercially available coffee beverages (Comparative Examples 2 to 5).

Regarding the Brix measurement, it can be confirmed that the coffee brewed according to the present invention contains more components such as sugar, salt, protein, and acid than coffee prepared by conventional methods, which improves the taste of the coffee.

Regarding the pH measurement, it can be confirmed that the coffee brewed according to the present invention has a lower content of chlorogenic acid, which can spoil the inherent taste and flavor of coffee, than coffee brewed by conventional methods.

Regarding the TDS measurement, it can also be confirmed that the coffee brewed according to the present invention has a much superior body, which represents the inherent taste and flavor of coffee, compared to coffee brewed by conventional methods.

### Test Example 3: Sensory Evaluation

To confirm the evaluation of taste, flavor, and color of the coffee beverage prepared with coffee beans with the silverskin in the center cut separated and removed according to the present invention, an evaluation test was conducted through Example 2 and Comparative Examples 6 to 10 below.

The evaluation test, conducted on the extracted coffees with a panel of 20 adults from the general public and a group of experts, consisted of six items: Flavor, Sweetness, Umami, Balance, Coffee Color, and Overall evaluation. The evaluation method involved assigning a score from 1 to 5 for each item (5, very good; 4, slightly good; 3, average; 2, slightly not good; 1, not good at all).

### [Example 2]

An evaluation of six items, including flavor, sweetness, umami, balance, coffee color, and overall evaluation, was conducted on coffee brewed from beans with the silverskin in the center cut separated and removed.

### [Comparative Example 6]

An evaluation of the same six items, including flavor, sweetness, umami, balance, coffee color, and overall evaluation, was conducted in the same manner as Example 2, but on coffee brewed from beans without the silverskin separated and removed.

### [Comparative Example 7]

An evaluation of the same six items, including flavor, sweetness, umami, balance, coffee color, and overall evaluation, was conducted in the same manner as Example 2, but on coffee brewed from Company A's coffee beans.

### [Comparative Example 8]

An evaluation of the same six items, including flavor, sweetness, umami, balance, coffee color, and overall evaluation, was conducted in the same manner as Example 2, but on coffee brewed from Company B's coffee beans.

### [Comparative Example 9]

An evaluation of the same six items, including flavor, sweetness, umami, balance, coffee color, and overall evaluation, was conducted in the same manner as Example 2, but on coffee brewed from Company C's coffee beans.

### [Comparative Example 10]

An evaluation of the same six items was conducted in the same manner as Example 2, but on coffee brewed from Company D's coffee beans.

**[Table 6]**

| | Example 2 | Comp. Ex. 6 | Comp. Ex. 7 | Comp. Ex. 8 | Comp. Ex. 9 | Comp. Ex. 10 |
|---|---|---|---|---|---|---|
| Flavor | 4.05 | 3.15 | 2.05 | 3.05 | 3.45 | 3.50 |
| Sweetness | 4.50 | 3.20 | 3.85 | 3.75 | 3.75 | 3.15 |
| Umami | 3.45 | 2.05 | 2.15 | 2.60 | 2.95 | 2.55 |
| Balance | 3.50 | 2.60 | 2.95 | 2.05 | 3.05 | 3.15 |
| Coffee Color | 4.35 | 3.80 | 3.15 | 3.15 | 2.55 | 3.05 |
| Overall | 4.80 | 3.95 | 4.15 | 4.05 | 3.80 | 4.00 |

As can be seen from the experimental results shown in Table 6 (Results of Sensory Evaluation), it was confirmed that the coffee beverage prepared with coffee beans with the silverskin in the center cut separated and removed according to the present invention (Example 2) showed improved effects in flavor, sweetness, umami, balance, coffee color, and overall evaluation compared to the coffee beverage without the silverskin separated and removed (Comparative Example 6) and commercially available coffee beverages (Comparative Examples 6 to 10).

In conclusion, it was confirmed that the coffee prepared with coffee beans with the silverskin in the center cut separated and removed according to the present invention has the advantage of superior preference among both the general public and expert groups in terms of Flavor, Sweetness, Umami, Balance, Coffee Color, and Overall evaluation, and thus can enhance the quality of the coffee beans themselves.

The foregoing description of the present invention is for illustrative purposes, and it will be understood by those of ordinary skill in the art to which the present invention pertains that the invention can be easily modified into other specific forms without changing the technical spirit or essential features thereof. Therefore, it should be understood that the embodiments described above are illustrative in all aspects and not restrictive. For example, each component described as a single unit may be implemented in a distributed manner, and likewise, components described as distributed may be implemented in a combined form.

The scope of the present invention is indicated by the claims below rather than the detailed description above, and all changes or modifications derived from the meaning and scope of the claims and their equivalents should be construed as being included in the scope of the present invention.

## Claims

1. A method for preparing coffee beans with silverskin separated and removed, comprising:
a washing step of putting green coffee beans into a storage container filled with water, washing the green coffee beans, and taking the green coffee beans out;
a step of primarily separating and removing the silverskin of the green coffee beans by a physical or chemical method after the washing step;
a step of secondarily separating and removing the silverskin located in the center cut of the green coffee beans by heat-treating the green coffee beans with steam after the primarily silverskin separating and removing step;
a drying step of drying the green coffee beans that have undergone the heat treatment step;
a step of roasting the green coffee beans that have undergone the drying step; and
a step of tertiarily separating and removing the silverskin located in the center cut of the coffee beans by grinding the roasted beans.

2. The method of claim 1, wherein the physical or chemical method in the primarily silverskin separating and removing step is one or more of saltwater, a brush, and high-pressure air.

3. The method of claim 1, wherein the heat treatment in the secondary silverskin separating and removing step is performed with steam at a temperature of 95°C to 100°C for 3 to 5 minutes.

4. The method of claim 1, wherein the roasting step is performed by roasting the green coffee beans at a temperature of 200°C to 220°C for 10 to 14 minutes.

5. The method of claim 1, wherein the tertiary silverskin separating and removing step is performed by grinding the coffee beans to a particle size within 1.0 mm using two or more grinding rollers.

6. Coffee beans with the silverskin in the center cut separated and removed, prepared by the method of any one of claims 1 to 5.

7. The coffee beans of claim 6, wherein the acid value of the coffee bean powder is included at a concentration of 2.0 mg/g to 4.5 mg/g.

8. The coffee beans of claim 6, wherein the peroxide value of the coffee bean powder is included at a concentration of 15 meq/kg to 39 meq/kg.

9. A processed coffee product prepared by grinding the coffee beans of claim 6.

10. A coffee beverage prepared by brewing the processed coffee product of claim 9.
